# EUROPEAN PATENT APPLICATION

(11) **EP 4 757 364 A1**
(43) Date of publication of application: **10.06.2026**
(21) Application number: 25221232.9
(22) Date of filing: 05.12.2025
(51) Int. Cl.: H04W 8/18, H04W 4/70

(54) **METHOD FOR MANAGING AN EMBEDDED UNIVERSAL INTEGRATED CIRCUIT CARD, CORRESPONDING DEVICE AND SYSTEM ARCHITECTURE**

(30) Priority: 09.12.2024 IT 202400027921
(71) Applicant: STMicroelectronics International N.V., 1228 Plan-les-Ouates, Geneva (CH)
(72) Inventor: FOLLERO, Giulio, I-80072 Pozzuoli (Napoli) (IT); FATTORUSO, Nicola, I-80054 Gragnano (Napoli) (IT)
(74) Representative: Buzzi, Notaro & Antonielli d'Oulx S.p.A.

(57) **Abstract**

Method for managing an embedded Universal Integrated Circuit Card, eUICC, for Internet of Things, IoT, devices configured to have associated therewith:
- a fallback remote manager module, in particular a fallback eSIM IoT remote Manager eIM, which upon association (300) with the eUICC for IoT devices is configured to have its operation disabled; and
- at least one further remote manager module, in particular at least one further eSIM IoT remote Manager eIM;
said method comprising, at the eUICC for IoT devices:
- checking (304) whether the at least one further remote manager module, which is associated with said eUICC for IoT devices, is reachable; and
- in response to said operation of checking (304) indicating (306) an absence (N) of reachable further remote manager modules associated with said eUICC for IoT devices, enabling (308) said fallback remote manager module to operate on the eUICC for IoT devices.

## Description

### Technical field

The description relates to integrated circuit cards.

One or more embodiments can be applied to integrated circuit cards such as, for instance, embedded UICCs, eUICCs.

### Background

Integrated circuit cards such as Universal Integrated Circuit Cards, UICCs are widely used in a variety of contexts and applications such as in mobile terminals (mobile network devices) in order to facilitate establishing a connection with the Global System for Mobile Communications, GSM or the Universal Mobile Telecommunications System, UMTS networks, maintaining the integrity and security of personal data.

Embedded UICCs, eUICCs are a type of integrated circuit card based on architectural standards published by the GSM Association, GSMA and configured to facilitate a secure storage of one or more SIM ("Subscriber Identity Module") card profiles, each of such one or more SIM card profiles comprising unique identifiers and cryptographic keys used by a cellular network service providers in order to uniquely identify each of the profiles.

For instance, such profiles may be used in a mobile network device comprising a corresponding eUICC, thus, enabling such mobile network device to register and securely communicate via the cellular network.

The technical specification of the GSMA SGP.31 and GSMA SGP.32 standard facilitates broadening the use of such eUICCs to IoT ("Internet of Things") devices.

The GSMA SGP.31 technical specification defines requirements and architectures to enable the remote provisioning and management of the eUICC for IoT devices in IoT devices (see, for instance, Specification SGP.31 eSIM IoT Architecture and Requirements Version 1.0 19 April 2022 or Specification SGP.31 eSIM IoT Architecture and Requirements Version 1.2 26 April 2024).

The GSMA SGP.32 technical specification defines the overall architecture of the eUICC IoT system for IoT device (see, for instance, eSIM IoT Technical Specification, Version 1.0.1, 04 July 2023).

IoT devices may be devices comprising sensors, processing ability, software and/or other technologies that can be configured to connect and exchange data with other devices and/or systems over the Internet or other communications networks, for instance, the cellular network.

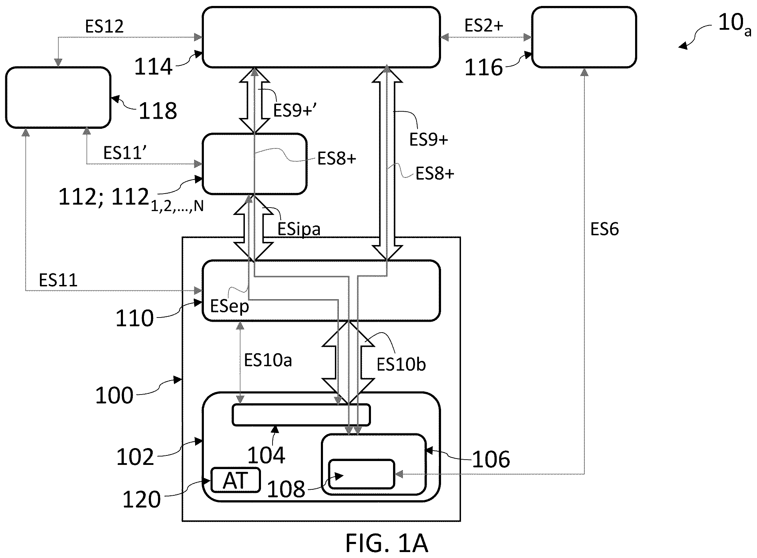

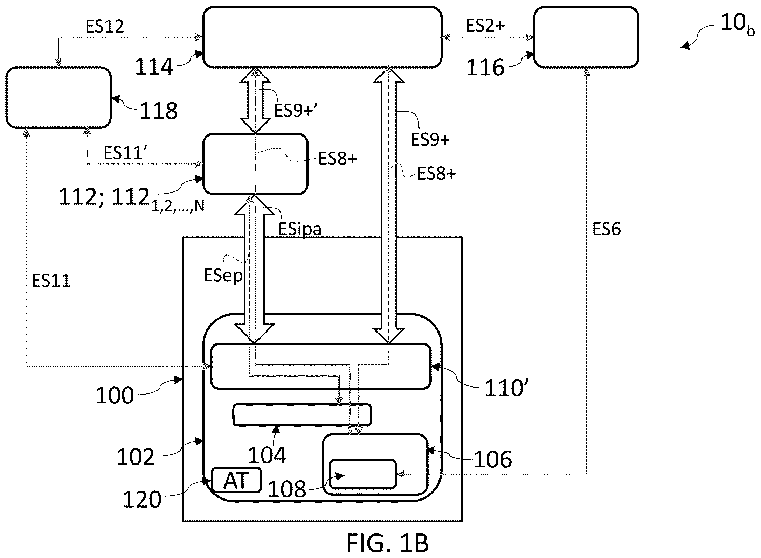

The general architecture of a system for remotely provisioning and managing an eUICC for IoT devices is illustrated in Figure 1A or in Figure 1B.

Figure 1A illustrates an IoT device 100 comprising:
- an eUICC for IoT devices 102, such eUICC for IoT devices 102 comprising an ISD-R ("Issuer Security Domain - Root") block 104 and an ISD-P ("Issuer Security Domain - Profile") block 106 that comprises an MNO-SD ("Mobile Network Operator Security Domain") block 108; and
- an IPAd ("IoT Profile Assistant in the IoT Device") block 110 configured to serve as a proxy between the eUICC for IoT devices 102 and an eSIM IoT remote Manager, eIM 112.

The eUICC for IoT devices 102, in particular, its ISD-R block 104, may be configured to be interfaced with the IPAd block 110 through:
- a first IPA--eUICC interface ES10a, for performing profile download and installation operations and handling profile discovery, and
- a second IPA--eUICC interface ES10b, for performing generic eUICC package download and execution.

The IPAd block 110 may be configured to be interfaced with the eIM 112 through an eIM--IPA interface ESipa, for performing profile download and installation operations. Such eIM--IPA interface ESipa may be used for triggering profile download at the IPAd block 110 and for providing a secure transport of the downloaded profiles to the eUICC for IoT devices 102.

The eIM 112 is a module, usually a software implemented module, for instance, a server, configured to be external to the IoT device 100 and configured to perform remote profile state management operations (PSMOs), that is, subscriptions management operations, and eIM Configuration Operations (eCOs), that is, operations for managing other eIMs, on a single IoT device or a fleet of IoT devices.

It is noted that the eIM 112, differently from other platforms such as a SM-DP+ block 114 described in the following, may not require a certification, for instance, a SAS ("Security Accreditation Scheme") certification. In fact, the eIM 112 can be controlled by an OEM ("Original Equipment Manufacturer") that chooses the level of security of such eIM 112.

The profile state management operations may comprise for instance, sending profile state management packages to the eUICC for IoT devices 102, enable, disable, and delete profiles or to trigger profile downloads at eUICC of the IoT devices. The eIM 112 can either be a stand-alone component or a component of a higher-level functional system (e.g., device management platform).

Such eIM 112 may be configured to manage a single device, for instance, the IoT device 100, or a plurality of IoT devices, facilitating the management of such devices and their profiles.

To manage a given device, such eIM 112 may be configured to be interfaced with the eUICC for IoT devices 102 of such given device through an eIM--eUICC interface ESep, such eIM--eUICC interface ESep being a logical end-to-end interface between eIM 112 and such eUICC for IoT devices 102 used to transfer eUICC packages for profile state management and eIM configuration data sent by the eIM 112.

The eUICC packages for profile state management may comprise a REMOTE administration command or a plurality of REMOTE administration commands, that is, a session. A session could comprise even a single command.

It is noted that the REMOTE administration commands can be divided into two groups, a first group comprising commands related to eIM Configuration Operations (eCOs) and a second group comprising commands related to Profile State Management Operations (PSMOs).

Such REMOTE administration commands may comprise, for instance, the following types of commands:
- an enable command, used to enable an installed profile in the eUICC 102, related to Profile State Management Operations;
- a disable command, used to disable an enabled profile in the eUICC 102, related to Profile State Management Operations;
- a delete command, used to delete an installed profile in the eUICC 102, related to Profile State Management Operations;
- a list of profile information command (related to Profile State Management Operations), used by the eIM 112 to retrieve a list of profile information for installed profiles, including their current state, that is, enabled or disabled, and their associated profile metadata;
- a get RAT ("Rules Authorisation Table") command, used by the eIM 112 to retrieve the Rules Authorisation Table, RAT from the eUICC 102, the get RAT command being related to Profile State Management Operations;
- a configure auto-enable command, used to configure an automatic enabling of a profile in the eUICC 102, related to Profile State Management Operations;
- an ADD eIM command, used to add an associated eIM 112 to the eUICC 102 by providing eIM configuration data, related to eIM Configuration Operations;
- an update eIM command, used to update eIM configuration data within the eUICC 102, related to eIM Configuration Operations;
- a DELETE eIM command, used to delete an associated eIM 112 from the eUICC 102, related to eIM Configuration Operations; and/or
- a list eIM command, used by the eIM 112 to request the eUICC 102 to provide a list of currently configured associated eIMs, related to eIM Configuration Operations.

Therefore, the eIM 112 may be further configured to manage a list of eIMs on an eUICC, that is, to perform eCO ("eIM Configuration Operation"), for instance, by adding new eIMs via the ADD eIM command, deleting eIMs via the DELETE eIM command, and the like.

Such eIM 112 is further configured to communicate with:
- a SM-DP+ ("Subscription Manager Data Preparation +") block 114, which is a server configured to prepare, store, and deliver digital eSIM profiles based on information obtained from an operator 116 through an operator--SM-DP+ interface ES2+, such operator--SM-DP+ interface ES2+ being used by the operator to request the preparation of a profile for one or more eUICCs for IoT devices 102 and for other administrative functions, and
- a SM-DS ("Subscription Manager Discovery Server") block 118, which is a server configured to hold a list of the profiles that are available to each of the considered devices.

The communication between the eIM 112 and the SM-DP+ block 114 may be implemented through an eIM--SM-DP+ interface ES9+', such eIM--SM-DP+ interface ES9+' being used for profile download and installation and being secured with an HTTPS ("HyperText Transfer Protocol Secure") protocol in server authentication mode.

The communication between the eIM 112 and the SM-DS block 118 may be implemented through an eIM--SM-DS interface ES11', such eIM--SM-DS interface ES11' being used to retrieve records of the events between such eIM 112 and such SM-DS block 118 and being secured by TLS ("Transport Layer Security") in server authentication mode.

In addition, such SM-DP+ block 114 may be configured to be interfaced with the SM-DS block 118 through an SM-DS--SM-SP+ interface ES12, such SM-DS--SM-SP+ interface ES12 being used by the SM-DP+ block 114 to manage event registrations and event deletions on the SM-DS block 118.

The MNO-SD block 108 may be configured to be interfaced with the operator 116 through an operator--eUICC interface ES6, such operator--eUICC interface ES6 being used by the operator in order to manage their profiles stored within the eUICC for IoT devices 102 via OTA ("Over-The-Air") services.

The IPAd block 110 may be further configured to be interfaced with the SM-DP+ block 114 through an IPA--SM-DP+ interface ES9+, such IPA--SM-DP+ interface ES9+ being used for providing a secure transport of profile packages between the SM-DP+ block 114 and the IPAd block 110, for instance, using an HTTPS ("HyperText Transfer Protocol Secure") protocol in server authentication mode to communicate.

In addition, such IPAd block 110 may be further configured to be interfaced with the SM-DS block 118 through an IPA--SM-DS interface ES11, such IPA--SM-DS interface ES11 being used to retrieve records of events between such IPAd block 110 and such SM-DS block 118 and being secured by TLS ("Transport Layer Security") in server authentication mode.

The eUICC for IoT devices 102 may be further configured to be interfaced with the SM-DP+ block 114 through an SM-DP+--eUICC interface ES8+, such SM-DP+-eUICC interface ES8+ being configured to couple the ISD-P block 106 of the eUICC for IoT devices 102 with the SM-DP+ block 114 in order to provide a secure end-to-end channel between them for the administration of such ISD-P block 106 and the associated profiles during download and installation operations.

Such coupling provided by such SM-DP+--eUICC interface ES8+ may be intended to be tunneled either over:
- the IPA--SM-DP+ interface ES9+ and the second IPA--eUICC interface ES10b for a direct profile download, that is, wherein the IPAd block 110 can directly communicate with the SM-DP+ block 114, or
- the eIM--SM-DP+ interface ES9+', the eIM--IPA interface ESipa, and the second IPA--eUICC interface ES10b for an indirect profile download, that is, wherein the IPAd block 110 communicates with the SM-DP+ block 114 via the eIM 112.

In the general architecture of the system for remotely provisioning and managing eUICCs for IoT devices 102 as described in Figure 1A, such eUICC for IoT devices 102 is to be associated with at least one eIM 112 before being able to do any profile state management operations.

It is underlined that the expression "associated eIM" *per se* is in the field indicative of an eIM in a specific relationship with an eUICC, specifically an eIM whose eIM Configuration Data is available within the eUICC and that is used by the eUICC for verification of an eIM configuration operation or PSMO.

Such Configuration Data are used by the eUICC for verification of an eIM Configuration Operation or PSMO, as for instance defined in the Specification SGP.31 eSIM IoT Architecture and Requirements Version 1.0 19 April 2022.

Such association between the eUICC for IoT devices 102 and the at least one eIM 112 may be done by exchanging data and, in particular, via a key-pair, for instance, an ECC ("Elliptic-Curve Cryptography") keypair.

For instance, the eIM may send to the eUICC for IoT devices 102, through the eIM--eUICC interface ESep implemented on a communication network N, at least one set of data comprising configuration data of the at least one eIM 112.

For instance, such association may be performed via a request of association performed through a command ADD eIM comprising such at least one set of data and sent by the at least one eIM 112 to the eUICC for IoT devices 102, for instance, using the eIM--eUICC interface ESep implemented over the communication network N.

Such set of data may be sent either by the eIM 112 itself (as previously described) already associated with the eUICC or by the IPAd block 110 in case of the first eIM adding.

In response to the reception of the at least one set of data comprising the configuration data of the at least one eIM 112, that is, in response to the reception of a command ADD eIM, the eUICC for IoT devices 102 is configured to store such set of data, for instance, in the OS ("Operating System") of such eUICC 102.

After such storing operation, the eUICC for IoT devices 102 and the eIM 112 may be considered associated.

For instance, a set of data comprising configuration data of a corresponding eIM 112 may comprise:
- an eIM ID, that is, an eIM identifier, unique for each of the eIMs associated with a corresponding eUICC for IoT devices, for instance, a text string,
- one or more eIM keys, for instance, a public key of an asymmetric key pair, and
- one or more eIM certificates, that is, one or more electronic documents attesting a unique association between a public key and the identity of a subject, for instance, attesting a unique association between a public key and a corresponding eIM.

It is noted that a different set of data comprising configuration data of a corresponding eIM 112 is to be sent to the eUICC for IoT devices 102 for each of the eIMs 112 that is to be associated with such eUICC 102, therefore, a command ADD eIM may be sent for each of the eIMs 112 that is to be associated with the eUICC 102 by an already associated eIM.

In addition, an eIM 112 may be associated with an eUICC for IoT devices 102 at any time in the lifecycle of such eUICC for IoT devices 102, and a single eUICC for IoT devices 102 may be associated with more than one eIM 112.

In order to associate an additional eIM 112 with an eUICC for IoT devices 102, the set of data comprising configuration data of such additional eIM 112 is to be sent, for instance, by an eIM that is already associated with such eUICC for IoT devices 102, to such eUICC for IoT devices 102.

The sending of such set of data may be done, for instance, using a command ADD eIM comprising such set of data of the additional eIM 112 and sending such ADD eIM command from such already associated eIM to the eUICC for IoT devices 102, for instance, through the network N.

Moreover, an eIM 112 (for instance, a first eIM to be associated with an eUICC) may be associated by the IPAd block 110 with an eUICC for IoT devices 102 by sending a set of data comprising configuration data of such eIM 112 to the eUICC 102. These configuration data may be used for instance for verification of profile state manage operation.

It is noted that such association of the first eIM with an eUICC via the IPAd block 110 may be done latest at the OEM ("Original Equipment Manufacturer") device factory.

Even in the case of a first eIM association, the sending of such set of data may be done, for instance, using a command ADD eIM, that is, an ADD Initial EIM command in case of a first eIM association, comprising such set of data and sending such ADD Initial eIM command from the IPAd block 110 directly to the eUICC for IoT devices 102, for instance, without using the network N.

In addition, it is noted that such ADD Initial eIM command send by the IPAd block 110 to the eUICC for IoT devices 102 shall not comprise a signature in the set of data relating to the first eIM. In other words, the ADD Initial eIM command is not authenticated, while further ADD eIM commands that associate additional eIMs to the eUICC for IoT devices 102 shall comprise a digital cryptographic signature in the set of data relating to such additional eIMs 112 to allow the eUICC 102 to authenticate the set of data, that is, are authenticated.

It is noted that subsequent eIM management operations such as ADD eIM commands and DELETE eIM commands are performed via one or more eIMs associated with the eUICC and not by the IPA, thus, subsequent eIM management operations require authentication.

Once an eIM 112 has been associated with an eUICC for IoT devices 102, such eUICC 102 may be configured to process commands coming from such eIM 112, such commands being signed with an eIM private key of an asymmetric key pair, such asymmetric key pair comprising the eIM private key and an eIM public key, and verified on the eUICC side with the eIM public key of the asymmetric key pair, for instance, stored by the eUICC 102.

An association token generation unit 120, for instance, a global counter, may be configured to generate, if required in an ADD eIM command sent to the eUICC for IoT devices 102 by a given eIM 112, an association token AT that is associated with such given eIM 112 in order to avoid reply attacks.

Replay attacks consist in sniffing and resending previously sent command or a session to the eUICC for IoT devices 102 in order to deceive such eUICC for IoT devices 102 in accepting and performing such previously sent command or session.

It is noted that it is also possible to dissociate an eIM 112 from the eUICC 102, that is, to remove the association between such eIM 112 and the eUICC 102 to which it was associated, by removing the configuration data of the eIM 112 from the eUICC 102.

For instance, the association of the eIM 112 and the eUICC 102 may be ended by deleting the set of data comprising the configuration data of the eIM 112 from the OS of such eUICC for IoT devices 102.

For example, the deletion may be performed using a command DELETE eIM indicating which eIM is to be deleted.

Such command DELETE eIM is sent from an associated eIM or from a backend system to the eUICC for IoT devices 102 through the network N, for instance.

Therefore, eIMs 112 are configured to perform at least the following operations:
- associate other eIMs to a eUICC, for instance, via the ADD eIM command;
- delete other eIMs from a eUICC, that is, removing the association between the eIM that is to be deleted and the eUICC, for instance, via the DELETE eIM command; and
- enable, disable, and delete installed profiles in the eUICC.

Figure 1B illustrates general architecture of a system 10_{b} for remotely provisioning and managing an eUICC for IoT devices having a IoT Profile Assistant in the eUICC IPAe 110' (again described in the GSMA SGP.32 specification) instead of a IoT Profile Assistant in the IoT Device IPAd 110.

It is noted that parts, elements, and/or components which have already been described with reference to Figure 1A are denoted by the same references previously used in such figure. Therefore, the description of such previously described parts, elements, and/or components will not be repeated in the following in order not to overburden the present description.

Therefore, eUICC for IoT devices 102 according to Figure 1B further comprises an IPAe 110' module, for instance, a software module comprised in the eUICC operating system, configured to perform the functions and operations that in Figure 1A are performed via the IPAd 110.

Hence, the IPAe block 110' is configured to serve as a proxy between the eUICC for IoT devices 102 and the eSIM IoT remote Manager, eIM 112.

The ISD-R block 104 comprised in the eUICC for IoT devices 102 may be configured to be interfaced with the eIM 112 via the IPAe block 110', for instance, through the eIM--IPA interface ESipa used to perform profile download and installation operations and the eIM--eUICC interface ESep that is a logical end-to-end interface between the eIM 112 and the eUICC for IoT devices 102 used to transfer eUICC packages for profile state management and eIM configuration data sent by the eIM 112.

Hence, such eIM--IPA interface ESipa may be used for triggering profile download at the IPAe block 110' and for providing a secure transport of the downloaded profiles to the eUICC for IoT devices 102.

Such IPAe block 110' may be further configured to be interfaced with the SM-DP+ block 114 through an IPA--SM-DP+ interface ES9+, such IPA--SM-DP+ interface ES9+ being used for providing a secure transport of profile packages between the SM-DP+ block 114 and the IPAe block 110', for instance, using an HTTPS ("HyperText Transfer Protocol Secure") protocol in server authentication mode to communicate.

In addition, such IPAe block 110' may be further configured to be interfaced with the SM-DS block 118 through an IPA--SM-DS interface ES11, such IPA--SM-DS interface ES11 being used to retrieve records of events between such IPAe block 110' and such SM-DS block 118 and being secured by TLS ("Transport Layer Security") in server authentication mode.

The eUICC for IoT devices 102 may be further configured to be interfaced with the SM-DP+ block 114 through an SM-DP+--eUICC interface ES8+, such SM-DP+-eUICC interface ES8+ being configured to couple the ISD-P block 106 of the eUICC for IoT devices 102 with the SM-DP+ block 114 in order to provide a secure end-to-end channel between them for the administration of such ISD-P block 106 and the associated profiles during download and installation operations.

Such coupling provided by such SM-DP+--eUICC interface ES8+ may be intended to be tunneled either over:
- the IPA--SM-DP+ interface ES9+ for a direct profile download, that is, wherein the IPAe block 110' can directly communicate with the SM-DP+ block 114, or
- the eIM--SM-DP+ interface ES9+' and the eIM--IPA interface ESipa for an indirect profile download, that is, wherein the IPAe block 110' communicates with the SM-DP+ block 114 via the eIM 112.

It is noted that the set of data comprising eIM configuration data used to associate a first eIM 112 with the eUICC 102 may also be sent, in embodiments according to Figure 1B, by the IPAe block 110' to the eUICC for IoT devices 102. It is noted that same conclusions related to an association performed via the IPAd block 110 described above are also valid for associations performed via the IPAe block 110', thus, for instance, an ADD Initial eIM command send by the IPAe block 110' to the eUICC for IoT devices 102 shall not comprise a signature.

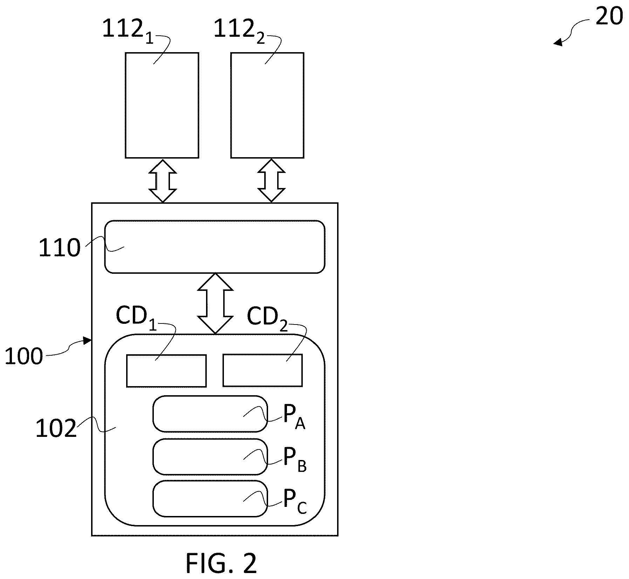

Figure 2 illustrates components 20 of the system 10ₐ for remotely provisioning and managing an eUICC for IoT devices 102, such eUICC for IoT devices 102 being associated with a first eIM 112₁ and a second eIM 112₂, and storing a plurality of profiles, for instance, a first profile P_{A}, a second profile P_{B}, and a third profile P_{C}.

It is noted that parts, elements, and/or components which have already been described with reference to Figure 1A are denoted by the same references previously used in such figure. Therefore, the description of such previously described parts, elements, and/or components will not be repeated in the following in order not to overburden the present description.

It is also noted that same conclusions apply if the system 10_{b} of Figure 1B is considered instead of the system 10ₐ of Figure 1A.

It is noted that, in response to the association of the eUICC for IoT devices 102 with the first eIM 112₁ and a second eIM 112₂, such eUICC for IoT devices 102 respectively stores a first set of eIM configuration data CD₁ and a second set of eIM configuration data CD₂.

It is also noted that the profiles P_{A}, P_{B}, and P_{C} and the sets of eIM configuration data CD₁ and CD₂ (except for a first set of eIM configuration data that is to be added via the IPAd block 110) may only be managed on the eUICC 102 via associated eIMs, that is, via eIMs that are associated with the eUICC for IoT devices 102.

In fact, as previously described, the communication from the eIM 112 to the eUICC 102 can be secured by using the information stored in the set of eIM configuration data CD, for instance, comprising an eIM public key, association tokens used for security, counters, and the like. Therefore, commands sent from the eIM 112 to the eUICC 102 and eUICC responses sent to the eIM 112 are signed.

A problem of known solutions is related to the fact that if eIMs 112 that are associated to an eUICC for IoT devices 102 are discontinued, that is, if every eIM server 112 associated with the eUICC 102 is no longer reachable, it will no longer be possible to execute commands and manage the profiles P_{A}, P_{B}, and P_{C} and the sets of eIM configuration data CD₁ and CD₂ stored within the eUICC 102, thus, leading to a "locked" eUICC where there is no possibility of updating the profiles P_{A}, P_{B}, and P_{C}.

Known solutions try to solve such a problem by using a RSP ("Remote SIM Provisioning") eUICC, that is, a eUICC provided with the possibility of having its profiles remotely managed by storing, installing, switching, and deactivating such profiles over-the-air ("OTA") by paying the cost of an additional eIM 112 associated to the eUICC 102 for the whole lifetime of such eUICC 102.

A problem of this approach is that the additional eIM 112 can manage at any moment:
- the profiles P_{A}, P_{B}, and P_{C}, and
- the other associated eIMs, for instance, the first eIM 112₁ and the second eIM 112₂, via the managing of the sets of eIM configuration data CD₁ and CD₂.

Therefore, the eUICC Manufacturer ("EUM") is allowed to manage such profiles and the other associated eIMs at any moment, causing problems of security since eIM owners might not agree with the fact that other entities are allowed to manage the device.

Hence, solutions that facilitate preventing the locking of the eUICC, without allowing the managing of profiles and associated eIMs at any moment during the lifetime of such eUICC may be advantageous in order to solve the previously described problems.

### Object and summary

An object of one or more embodiments is to contribute in providing solutions that facilitate preventing the locking of the eUICC, without allowing the possibility of managing profiles and associated eIMs at any moment during the lifetime of such eUICC.

According to one or more embodiments, that object is achieved via a method for managing an embedded Universal Integrated Circuit Card having the features set forth in the claims that follow.

One or more embodiments concern a related device.

One or more embodiments concern a related system architecture.

The claims are an integral part of the technical teaching provided in respect of the embodiments.

Solutions as described herein include a method for managing an embedded Universal Integrated Circuit Card, eUICC, for Internet of Things, IoT, devices configured to have associated therewith:
- a fallback remote manager module, in particular a fallback eSIM IoT remote Manager eIM, which upon association with the eUICC for IoT devices is configured to have its operation disabled; and
- at least one further remote manager module, in particular at least one further eSIM IoT remote Manager eIM;
said method comprising, at the eUICC for IoT devices:
- checking whether the at least one further remote manager module, which is associated with said eUICC for IoT devices, is reachable; and
- in response to said operation of checking indicating an absence of reachable further remote manager modules associated with said eUICC for IoT devices, enabling said fallback remote manager module to operate on the eUICC for IoT devices.

In various embodiments, the association between the eUICC for IoT devices and the fallback remote manager module is performed by storing into the eUICC for IoT devices configuration data of said fallback remote manager module; and the association between the eUICC for IoT devices and the at least one further remote manager module is performed by storing into the eUICC for IoT devices configuration data of said at least one further remote manager module.

In various embodiments, the method comprises, at the eUICC for IoT devices and in response to said operation of checking indicating a presence of reachable further remote manager modules associated with said eUICC for IoT devices, performing again said operation of checking.

In various embodiments, said operation of checking:
- comprises waiting for a given amount of time before checking whether the at least one further remote manager module associated with said eUICC for IoT devices is reachable; or
- is performed in response to events involving the at least one further remote manager module and/or the eUICC for IoT devices.

In various embodiments, said operation of checking comprises performing at least one connection, preferably by pinging, attempt towards the at least one further remote manager module, in particular via an IoT Profile Assistant in the IoT Device or an IoT Profile Assistant in the eUICC.

In various embodiments, the method comprises, at the eUICC for IoT devices:
- verifying whether an IP address of the at least one further remote manager module is available, and
- if said IP address is not available, retrieving said IP address by executing a Domain Name System, DNS, session.

In various embodiments, the method comprises verifying at the eUICC for IoT devices whether said absence of reachable further remote manager modules associated with said eUICC for IoT devices is caused by an error of a communication network;
wherein said operation of checking indicates an absence of reachable further remote manager modules associated with said eUICC for IoT devices if said operation of verifying indicates that the absence is not caused by an error of the communication network.

In various embodiments, said operation of enabling the fallback remote manager module to operate on the eUICC for IoT devices comprises enabling the fallback remote manager module to perform:
- operations for managing profiles stored within the eUICC for IoT devices, in particular Profile State Management Operations, PSMOs; and
- operations for managing further remote manager modules in the eUICC for IoT devices, in particular eIM Configuration Operations, eCOs.

In various embodiments, the method comprises, in response to the operation of enabling the fallback remote manager module to operate on the eUICC for IoT devices, sending from said eUICC for IoT devices a notification to the fallback remote manager module indicating that said fallback remote manager module is enabled to perform operations on the eUICC for IoT devices.

In various embodiments, the method comprises, at the eUICC for IoT devices:
- in response to the operation of enabling the fallback remote manager module to operate on the eUICC for IoT devices, receiving a request of association from said fallback remote manager module indicating to associate the eUICC for IoT devices with a new remote manager module, in particular a new eSIM IoT remote Manager eIM; and
- storing into the eUICC for IoT devices configuration data of said new remote manager module.

In various embodiments, the method comprises disabling, at the eUICC for IoT devices and in response to said operation of storing into the eUICC for IoT devices configuration data of said new remote manager module, the operation of the fallback remote manager module.

In various embodiments, the embedded Universal Integrated Circuit Card, eUICC, for Internet of Things, IoT, devices is operated according to the GSMA SGP.32 standard or the GSMA SGP.31 standard.

Therefore, solutions as described herein facilitate preventing the locking of the eUICC, without allowing the managing of profiles and associated eIMs at any moment during the lifetime of such eUICC.

### Brief description of the figures

One or more embodiments will now be described, by way of example only, with reference to the annexed figures, wherein:
Figure 1A and Figure 1B, as previously described, illustrate general architectures of a system for remotely provisioning and managing an eUICC for IoT devices;
Figure 2, as previously described, illustrates components of the system for remotely provisioning and managing the eUICC for IoT devices;
Figure 3 illustrates a flowchart of an exemplary method for managing the eUICC according to embodiments of the present description; and
Figure 4 illustrates an exemplary communication diagram according to embodiments of the present description.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

As described above, solutions as disclosed herein facilitate preventing the locking of the eUICC (that is, preventing that the eUICC is brought into a state where there is no possibility of updating the profiles P_{A}, P_{B}, and P_{C}), without allowing the managing of profiles and associated eIMs at any moment during the lifetime of such eUICC, so as to mitigate problems related to eIM discontinuance and problems related to the EUM being allowed to manage the profiles and the other associated eIMs at any moment.

It is noted that a main element leading to such a problem is given by the fact that the additional eIM 112 of known solutions is always available, therefore, the EUM is always able to manage the profiles and the other eIMs associated to the eUICC.

Therefore, solutions as described herein are configured to enable or disable the capability of the additional eIM 112, referred in the following as fallback eIM 112_{FB}, of performing operations, for example, Profile State Management Operations (PSMOs) and eIM Configuration Operations (eCOs), on the eUICC for IoT devices 102. Hence, solutions as described herein are configured to enable or disable the operation of the fallback eIM 112_{FB}, for instance, such operation comprising operations on profiles and/or other eIMs, by way of example, respectively PSMOs and/or eCOs, on the eUICC for IoT devices 102.

Hence, the capability of the fallback eIM 112_{FB} of performing operations on the eUICC for IoT devices 102 (that is, the operation of such fallback eIM 112_{FB}) may be enabled only when requested, for instance, when the other eIMs associated with the eUICC for IoT devices 102 are no more reachable.

Solutions according to the present description disclose a method for managing an embedded Universal Integrated Circuit Card, eUICC, for Internet of Things, IoT, devices 102 configured to have associated therewith:
- a fallback remote manager module, in particular a fallback eSIM IoT remote Manager eIM 112_{FB} as described above, which upon association with the eUICC for IoT devices 102 is configured to have its operation disabled, thus, for instance, upon association with the eUICC such fallback remote manager module 112_{FB} is not able to perform operations such as profile state management operations and eIM configuration operations in the eUICC for IoT devices 102 to which it is associated; and
- at least one further remote manager module, in particular at least one further eSIM IoT remote Manager eIM 112.

The method described herein comprises, at the eUICC for IoT devices 102:
- checking whether the at least one further remote manager module 112, which is associated with the eUICC for IoT devices 102, is reachable; and
- in response to the operation of checking indicating an absence of reachable further remote manager modules 112 associated with such eUICC for IoT devices 102, that is, if a reachable further remote manager module in the further remote manager modules associated with the eUICC 102 is not present, enabling such fallback remote manager module 112_{FB} to operate on the eUICC for IoT devices 102.

For instance, the enabling of the fallback remote manager module 112_{FB} to operate on the eUICC for IoT devices 102 may be performed by enabling such fallback remote manager module 112_{FB} to perform operations such as profile state management operations and eIM configuration operations in the eUICC for IoT devices 102 to which it is associated.

It is noted that the embedded Universal Integrated Circuit Card, eUICC, for Internet of Things, IoT, devices 102 may be operated according to the GSMA SGP.32 standard or the GSMA SGP.31 standard.

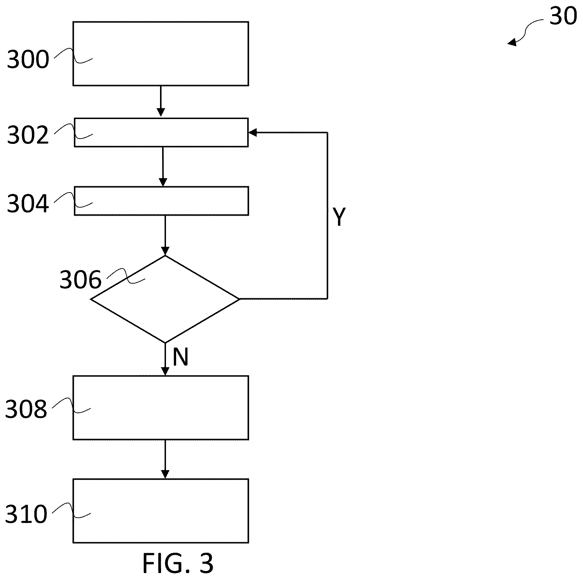

Figure 3 illustrates a flowchart 30 of an exemplary method for managing the eUICC 102 according to embodiments of the present description.

The fallback eIM configuration data used to associate the fallback eIM 112_{FB} with the eUICC for IoT devices 102 can be preloaded 300 in the eUICC 102. As a result of the preloading operation 300, the eUICC for IoT devices 102 and the fallback eIM 112_{FB} are associated.

In step 300 of Figure 3, the fallback eIM 112_{FB} is not reachable by the eUICC 102 since the capability of such fallback eIM 112_{FB} of performing operations on the eUICC for IoT devices 102 is disabled, therefore, the fallback eIM 112_{FB} operation is disabled, leading to an eIM that cannot perform profile state management operations or eIM configuration operations on the eUICC for IoT devices 102.

Therefore, upon association of the fallback eIM 112_{FB} with the eUICC for IoT devices 102, the fallback eIM 112_{FB} is configured to have its operation disabled, that is, is not configured to perform PSMOs and eCOs on the eUICC for IoT devices 102.

It is noted that the eUICC for IoT devices 102 may also be associated with further eIMs 112 which are standard eIMs, for instance, eIMs according to the GSMA SGP.31 or GSMA SGP.32.

For example, the eUICC for IoT devices 102 may have associated therewith a set of further eIMs 112 configured to perform operations on the eUICC 102 such as profile state management operations and/or eIM configuration operations.

It is noted that the operations described in the following are performed only in response to the eUICC for IoT devices 102 being associated with at least one further eIM 112 (that is, with a first eIM 112 different from the fallback eIM 112_{FB}) via the IPAd block 110 or the IPAe block 110'. In fact, if the eUICC for IoT devices 102 is not associated for a first time with a further eIM 112, the following steps are not performed and the operation of the fallback eIM 112_{FB} remains disabled.

Therefore, according to solutions as described herein, the association, for instance, performed in the step 300, between the eUICC for IoT devices 102 and the fallback remote manager module, for instance, the fallback eIM 112_{FB}, may be performed by storing into the eUICC for IoT devices 102 configuration data of the fallback remote manager module 112_{FB}.

Similarly, the association between the eUICC for IoT devices 102 and the at least one further remote manager module, for instance, at least one eIM 112, is performed by storing into the eUICC for IoT devices 102 configuration data of the at least one further remote manager module 112.

At predetermined times, for instance, periodically or after a given waiting period of N minutes (waiting step 302 of Figure 3), the eUICC 102 is configured to check 304 whether at least one further eIM 112 in the set of further eIMs is reachable.

For instance, such checking operation 304 may be performed at the eUICC 102 by trying to connect, for instance by pinging, at least one time the further eIMs 112 comprised in the set of further eIMs.

Therefore, more in general, the eUICC 102 tries to connect at least one time with the further eIMs 112 comprised in the set of further eIMs by using an OPEN CHANNEL command. Such OPEN CHANNEL command enables the eUICC 102 to open a data channel with such further eIMs 112, for instance, by opening (for instance, by asking to a TERMINAL) a socket (using TCP, UPD, or the like) with the remote server, that is, with the further eIMs 112. If it is not possible to open the socket, the server, that is, the further eIM 112 that the eUICC tries to contact, will be marked as "unreachable".

It is noted that such TERMINAL is defined in the ETSI TS 102 223 specification, for instance, in the document TS 102 223 - V12.1.0 - Smart Cards; Card Application Toolkit (CAT) (Release 12).

It is noted that such waiting step 302 may, instead of using a time-based mechanism as described above, use events, for instance, any event involving a further eIM 112 in the set of further eIMs and/or the eUICC 102, to trigger the checking (by way of connecting, for instance, via pinging) mechanism.

For instance, such events that trigger the checking mechanism may be one or more of those described following.

As defined in the ETSI TS 102 223 specification, the terminal shall send periodically the STATUS command to the eUICC 102. Therefore, the eUICC 102 can count the number of STATUS commands sent by the TERMINAL and, after that a threshold has been reached by such count, the checking mechanism may be triggered. Hence, a first type of events may be related to a counter of STATUS commands comprised in the eUICC 102 reaching a given threshold.

As defined in the ETSI TS 102 223 specification, an ENVELOPE command may be considered, such ENVELOPE command being used to define a second type of events. In fact, the ENVELOPE command is used to send events to the card, the list of events being defined in such ETSI TS 102 223 specification. Therefore, upon receival of an event via the ENVELOPE command, the checking mechanism may be triggered. For instance, the terminal can send to the card an event Location status - Normal service every time that a network is attached.

In embodiments of solutions as described herein, if the IP address of a further eIM 112 in the set of further eIMs is not available, a DNS ("Domain Name System") session may be executed in order to retrieve such IP address before determining the further eIM 112 as not reachable.

Similarly, in embodiments of solutions as described herein, if a further eIM 112 in the set of further eIMs is not available due to an error of the communication network, further actions are performed, for instance, wait for the resolution of the error of the communication network, before determining the further eIM 112 as not reachable.

In general, other similar controls may be performed in order to determine the further eIM 112 as not reachable only when such eIM is actually not reachable because it has been discontinued.

Therefore, in methods according to the present description, the operation of checking, for instance, performed in the step 304:
- may comprise waiting, for instance, in the step 302, for a given amount of time before checking 304 whether the at least one further remote manager module, for instance, at least one further eIM 112, associated with said eUICC for IoT devices 102 is reachable; or
- may be performed in response to events involving the at least one further remote manager module 112 and/or the eUICC for IoT devices 102.

In addition, such operation of checking, for instance, performed in the step 304, may comprise performing at least one connection attempt towards the at least one further remote manager module (for instance, by sending pinging messages), for instance, the at least one further eIM 112, in particular via an IoT Profile Assistant in the IoT Device 110 or an IPAe block 110'.

The method according to the present description may also comprise, at the eUICC for IoT devices 102:
- verifying whether an IP address of the at least one further remote manager module, for instance, the at least one further eIM 112, is available, and
- if said IP address is not available, retrieving said IP address by executing a Domain Name System, DNS, session.

In addition, such method may comprise verifying at the eUICC for IoT devices 102 whether the absence of reachable further remote manager modules 112 associated with the eUICC for IoT devices 102 is caused by an error of a communication network. In such a case, the operation of checking, for instance, performed in the step 304, indicates, for instance, in the step 306, an absence of reachable further remote manager modules, for instance, an absence of reachable further eIMs 112, associated with said eUICC for IoT devices 102 if the operation of verifying indicates that the absence is not caused by an error of the communication network.

In response to the operation of checking 304 indicating 306 a presence of reachable further eIMs 112 associated with the eUICC for IoT devices 102, that is, if at least one further eIM 112 comprised in the set of further eIMs is reachable 306, for instance, if the connection attempt succeeds for at least one further eIM 112 in the set of further eIMs, the described method 30 may return to the waiting step 302, for instance, following the branch indicated with the reference Y in Figure 3.

Therefore, the method described herein may comprise at the eUICC for IoT devices 102, in response to the operation of checking, for instance, performed in the step 304, indicating, for instance, in the step 306, a presence of reachable further remote manager modules, for instance, a presence of reachable further eIMs 112, associated with said eUICC for IoT devices 102, performing again said operation of checking, for instance, returning to the step 304.

Otherwise, in response to the operation of checking 304 indicating 306 an absence of reachable further eIMs 112 associated with the eUICC for IoT devices 102, that is, if none of the further eIMs 112 comprised in the set of further eIMs is reachable, for instance, if the connection, for instance, by way of pinging, attempt fails for every further eIM 112 in the set of further eIMs, the described method 30 may proceed to an enabling step 308, for instance, following the branch indicated with the reference N in Figure 3.

In the enabling step 308, the eUICC for IoT devices 102 is configured to enable the capability of the fallback eIM 112_{FB} of performing operations, thus, the fallback eIM 112_{FB} is allowed to perform profile state management operations or eIM configuration operations on the eUICC for IoT devices 102.

Therefore, in response to the operation of checking 304 indicating 306 an absence of reachable further eIMs 112 associated with the eUICC for IoT devices 102, the fallback eIM 112_{FB} is enabled 308 to operate on the eUICC for IoT devices 102, that is, to perform operations on profiles and/or other eIMs, namely PSMOs and/or eCOs, on such eUICC for IoT devices 102.

For example, such enabling of the capability of the fallback eIM 112_{FB} of performing operations on the eUICC for IoT devices 102 (that is, of the operation of the fallback eIM 112_{FB}) may be performed by sending 310 from the eUICC for IoT devices 102 to the fallback eIM 112_{FB} a notification indicating that such fallback eIM 112_{FB} has to be enabled.

In response to the enabling of the capability of the fallback eIM 112_{FB} of performing operations on the eUICC for IoT devices 102, such fallback eIM 112_{FB} may be used, for instance, by an owner of such fallback eIM 112_{FB}, to associate the eUICC 102 with a new eIM 112, for instance, by performing one or more eIM configuration operations.

Similarly, such fallback eIM 112_{FB} may be used, in response to the enabling of its operation in order to perform operations on the eUICC for IoT devices 102, to manage the profiles stored within the eUICC for IoT devices 102, for instance, by performing one or more profile state managements operations.

If the fallback eIM 112_{FB} performs an eIM configuration operation to associate the eUICC for IoT devices 102 with a new eIM 112, after the association of such eUICC for IoT devices 102 with such new eIM 112, the fallback eIM 112_{FB} may have again its capability of performing operations on the eUICC for IoT devices 102 disabled by the eUICC 102b.

Therefore, in response to the association between the new eIM 112 and the eUICC for IoT devices 102, the fallback eIM 112_{FB} may be configured again to have its operation disabled, thus, to be not able to perform operations on profiles and/or other eIMs, namely PSMOs and/or eCOs, on the eUICC for IoT devices 102.

It is noted that the operation of enabling, for instance, in the step 308, the fallback remote manager module (for instance, the fallback eIM 112_{FB}) to operate on the eUICC for IoT devices 102 may comprise enabling such fallback remote manager module 112_{FB} to perform:
- operations for managing profiles stored within the eUICC for IoT devices 102, in particular Profile State Management Operations, PSMOs; and
- operations for managing further remote manager modules 112 in the eUICC for IoT devices 102, in particular eIM Configuration Operations, eCOs.

The method according to the present description may comprise, in response to the operation of enabling, for instance, in such step 308, the fallback remote manager module (for instance, the fallback eIM 112_{FB}) to operate on the eUICC for IoT devices 102, sending from the eUICC for IoT devices 102 a notification to the fallback remote manager module 112_{FB} indicating that such fallback remote manager module 112_{FB} is enabled to perform operations on the eUICC for IoT devices 102.

In addition, such method according to the present description may comprise, at the eUICC for IoT devices 102:
- in response to the operation of enabling, for instance, in such step 308, the fallback remote manager module (for instance, the fallback eIM 112_{FB}) to operate on the eUICC for IoT devices 102, receiving a request of association from said fallback remote manager module 112_{FB} indicating to associate the eUICC for IoT devices 102 with a new remote manager module, in particular a new eSIM IoT remote Manager eIM; and
- storing into the eUICC for IoT devices 102 configuration data of said new remote manager module.

Therefore, the method according to the present description may comprise disabling, at the eUICC for IoT devices 102 and in response to said operation of storing into the eUICC for IoT devices 102 configuration data of said new remote manager module, the operation of the fallback remote manager module 112_{FB}.

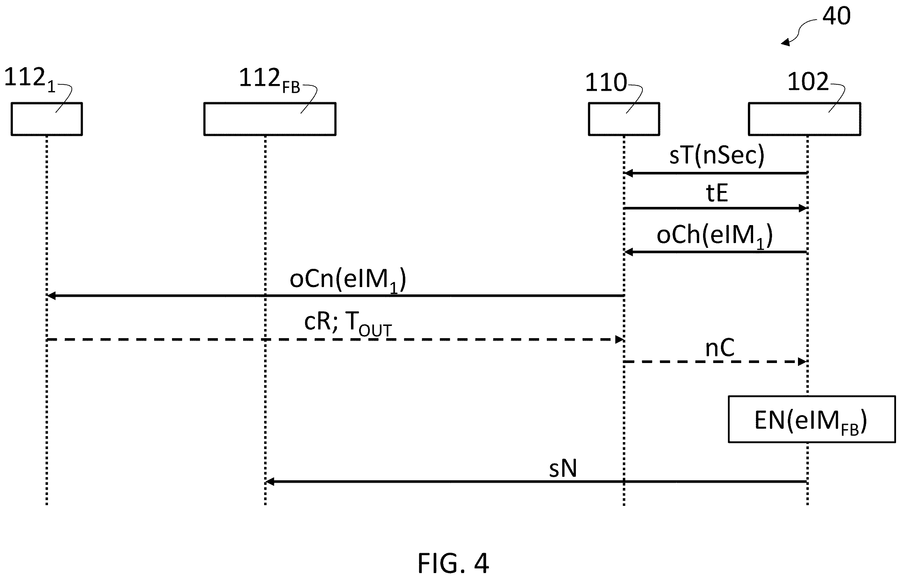

Figure 4 illustrates a communication diagram 40 according to embodiments of the present description.

In the exemplary scenario of Figure 4, the set of further eIMs comprises a first eIM 112₁ associated with the eUICC for IoT devices 102, thus, such eUICC for IoT devices 102 stores the configuration data of such first eIM 112₁. Hence, the steps described above (referring to Figure 3) can be performed since a first eIM association has already been performed via the IPAd block 110 or the IPAe block 110', for instance, the association of such first eIM 112₁ to the eUICC for IoT devices 102.

In addition, the eUICC for IoT devices 102 is associated with the fallback eIM 112_{FB} since the configuration data of such fallback eIM 112_{FB} are preloaded 300 in the eUICC 102. It is noted that upon association between the fallback eIM 112_{FB} and the eUICC for IoT devices 102, the fallback eIM 112_{FB} is configured to have its operation disabled, that is, is unable to perform profile state management operations and/or eIM configuration operations.

It is noted that even if the exemplary scenario of Figure 4 considers a waiting step 302 using a time-based mechanism as described above, also other mechanism may be considered.

The eUICC for IoT devices 102 may be configured to send to the IPAd block 110 or to the IPAe block 110' an indication of a time gap nSec corresponding to the waiting time of the waiting step 302, for instance, via a signal sT(nSec) indicating to set a timer for such waiting step 302 equal to the time gap nSec.

In response to the expiration of the time gap nSec, the IPAd block 110 or the IPAe block 110' may be configured to send a signal tE to the eUICC 102 indicating that an amount of time equal to the time gap nSec is expired.

In response to the reception of the signal tE indicating that an amount of time equal to the time gap nSec is expired, the eUICC 102 is configured to perform such checking operation 304.

For instance, the eUICC 102 may be configured to connect, for instance, pinging, the first eIM 112₁ to which it is associated by sending a first signal, for instance, a first ping signal oCH(eIM₁), indicating to open a channel towards the first eIM 112₁ (also referred to with the reference eIM₁ in such Figure 4) to the IPAd block 110 or to the IPAe block 110'.

Upon receival of the first signal oCH(eIM₁) sent by the eUICC 102, the IPAd block 110 or the IPAe block 110' may be configured to send a second signal, for instance, a second ping signal oCn(eIM₁), indicating to open a connection towards the first eIM 112₁ to such first eIM 112₁.

In the exemplary scenario of Figure 4, the first eIM 112₁ refuse to open a connection with the IPAd block 110 or the IPAe block 110' (for instance, because it has been discontinued), therefore, in response to the sending of the second signal oCn(eIM₁), the IPAd block 110 or the IPAe block 110' may receive:
- a connection refused signal cR indicating that the request of opening the connection has been refused by the first eIM 112₁, and/or
- a time-out signal T_{OUT} indicating that the request to open the connection has not received any answer from the first eIM 112₁ in a given amount of time equal to a maximum time for the first eIM 112₁ to answer.

In response to the reception of either one of the connection refused signal cR or the time-out signal T_{OUT}, the IPAd block 110 or the IPAe block 110' may be configured to send to the eUICC for IoT devices 102 a signal nC indicating that the connection towards the first eIM 112₁ has failed, thus, that the first eIM 112₁ is not reachable.

Hence, in the exemplary scenario according to Figure 4, such operation of checking 304 whether at least one further eIM 112 in the set of further eIMs is reachable indicates 306 that no further eIM 112 associated with the eUICC for IoT devices 102 is reachable. In fact, in the exemplary scenario according to Figure 4, the set of further eIMs does not comprise other eIMs besides the previously described first eIM 112₁.

It is noted that if other eIMs are present in the set of further eIMs, the operation of checking 304 whether at least one further eIM 112 in the set of further eIMs is reachable indicates 306 that no further eIM 112 associated with the eUICC for IoT devices 102 is reachable (that is, indicates an absence of reachable eIMs) if the eUICC for IoT devices 102 receives, for every eIM in the set of further eIMs, the signal nC indicating that the connection towards a respective eIM comprised in the set of further eIMs has failed.

In response to the operation of checking 304 indicating 306 an absence of reachable further eIMs 112 associated with the eUICC for IoT devices 102, the eUICC for IoT devices 102 is configured to enable the operation of the fallback eIM 112_{FB} (also referred with the reference eIM_{FB} in Figure 4), that is, the capabilities of performing operations of such fallback eIM 112_{FB}, for instance, via an enabling signal EN(eIM_{FB}) that indicates to enable such operation of the fallback eIM 112_{FB}.

Therefore, in response to such enabling operation 308, the fallback eIM 112_{FB} or eIM_{FB} is allowed to perform profile state management operations and/or eIM configuration operations on the eUICC for IoT devices 102.

For example, Figure 4 illustrates the notification sN that may be sent from the eUICC for IoT devices 102 to the fallback eIM 112_{FB} to indicate that such fallback eIM 112_{FB}, and in particular the capability of performing operations on the eUICC for IoT devices 102 by the fallback eIM 112_{FB}, that is, the operation of the fallback eIM 112_{FB}, has to be enabled.

Therefore, solutions as described herein refers to a method for managing an embedded Universal Integrated Circuit Card, eUICC, for Internet of Things, IoT, devices 102 configured to have associated therewith:
- a fallback remote manager module, in particular a fallback eIM 112_{FB} as described above, which upon association, for instance, in the previously described step 300, with the eUICC for IoT devices 102 is configured to have its operation disabled, thus, for instance, upon association with the eUICC such fallback remote manager module 112_{FB} is not able to perform operations such as profile state management operations and eIM configuration operations in the eUICC for IoT devices 102 to which it is associated; and
- at least one further remote manager module, in particular at least one further eSIM IoT remote Manager eIM 112.

The method described herein comprises, at the eUICC for IoT devices 102:
- checking, for instance, in the previously described step 304, whether the at least one further remote manager module 112, which is associated with the eUICC for IoT devices 102, is reachable; and
- in response to the operation of checking 304 indicating, for instance, in the step 306, an absence of reachable further remote manager modules 112 associated with such eUICC for IoT devices 102, that is, if a reachable further remote manager module in the further remote manager modules associated with the eUICC 102 is not present, enabling, for instance, in the step 308, such fallback remote manager module 112_{FB} to operate on the eUICC for IoT devices 102.

For instance, the enabling of the fallback remote manager module 112_{FB} to operate on the eUICC for IoT devices 102 may be performed by enabling such fallback remote manager module 112_{FB} to perform operations such as profile state management operations and eIM configuration operations in the eUICC for IoT devices 102 to which it is associated.

Solutions as described herein also refers to an embedded Universal Integrated Circuit Card, eUICC, for Internet of Things, IoT, devices 102 configured to have associated therewith:
- a fallback remote manager module, in particular a fallback eSIM IoT remote Manager eIM, for instance, the previously described fallback eIM 112_{FB}, which upon association, for instance, such association being performed in the step 300 described above, with the eUICC for IoT devices 102 is configured to have its operation disabled; and
- at least one further remote manager module, in particular at least one further eSIM IoT remote Manager eIM 112.

It is noted that when the fallback remote manager module 112_{FB} has its operation disabled, such fallback remote manager module 112_{FB} is not able to perform, for instance, profile state management operations, PSMOs, and eIM configuration operations, eCOs, in the eUICC for IoT devices 102 to which it is associated.

The eUICC for IoT devices 102 as descried herein is configured to execute the steps of the method according to the present description.

In addition, solutions as described herein also refer to a system architecture comprising:
- an embedded Universal Integrated Circuit Card, eUICC, for Internet of Things, IoT, devices 102 operating in an IoT device 100 and configured to have associated therewith a fallback remote manager module, for instance, the previously described fallback eIM 112_{FB}, and at least one further remote manager module, for instance, at least one standard eIM 112; and
- such fallback remote manager module 112_{FB}, in particular a fallback eSIM IoT remote Manager eIM 112_{FB}, which upon association, for instance, in a step 300, with the eUICC for IoT devices 102 is configured to have its operation disabled; and
- such at least one further remote manager module 112, in particular at least one further eSIM IoT remote Manager eIM 112.

The eUICC for IoT devices 102 comprised in such system architecture as described herein is configured to perform the steps of the method according to the present description.

In addition, such system architecture may further comprise at least a server 114, in particular a SM-DP+ server, which is configured to prepare profiles, store profiles, and deliver digital profiles to embedded Universal Integrated Circuit Cards, eUICCs 102, via the fallback remote manager module 112_{FB} or the at least one further remote manager module 112.

Thus, solutions as described herein facilitate the provision of a profile switching function without facing one or more of the following problems:
- interruption of service, with the eUICC being brought in a "locked" state, lacking the capability of managing the profiles stored therein; and/or
- allowing the eUICC Manufacturer ("EUM") to manage at any moment the profiles stored within the eUICC and the other eIMs that are associated to such eUICC.

Further advantages that may be obtained with solutions as described herein may be the following:
- reducing the dependency of the eUICC for IoT devices on external eIMs; and
- mitigating the previously described problems with a solution that is transparent to an end user, hence, a final user does not notice any different behavior since the fallback eIM described above is not enabled until some issue related to the reachability of the associated eIMs occurs.

Without prejudice to the underlying principles, the details and the embodiments may vary, even significantly, with respect to what has been described by way of example only without departing from the scope of the embodiments.

The extent of protection is determined by the annexed claims.

## Claims

1. Method for managing an embedded Universal Integrated Circuit Card, eUICC, for Internet of Things, IoT, devices (102) configured to have associated therewith:
- a fallback remote manager module (112_{FB}), in particular a fallback eSIM IoT remote Manager eIM, which upon association (300) with the eUICC for IoT devices (102) is configured to have its operation disabled; and
- at least one further remote manager module (112), in particular at least one further eSIM IoT remote Manager eIM;
said method comprising, at the eUICC for IoT devices (102):
- checking (304) whether the at least one further remote manager module (112), which is associated with said eUICC for IoT devices (102), is reachable; and
- in response to said operation of checking (304) indicating (306) an absence (N) of reachable further remote manager modules (112) associated with said eUICC for IoT devices (102), enabling (308) said fallback remote manager module (112_{FB}) to operate on the eUICC for IoT devices (102).

2. The method according to claim 1, wherein:
- the association (300) between the eUICC for IoT devices (102) and the fallback remote manager module (112_{FB}) is performed by storing into the eUICC for IoT devices (102) configuration data of said fallback remote manager module (112_{FB}); and
- the association between the eUICC for IoT devices (102) and the at least one further remote manager module (112) is performed by storing into the eUICC for IoT devices (102) configuration data of said at least one further remote manager module (112).

3. The method according to claim 1 or claim 2, comprising at the eUICC for IoT devices (102), in response to said operation of checking (304) indicating (306) a presence (Y) of reachable further remote manager modules (112) associated with said eUICC for IoT devices (102), performing again said operation of checking (304).

4. The method according to any one of the previous claims, wherein said operation of checking (304):
- comprises waiting (302) for a given amount of time before checking (304) whether the at least one further remote manager module (112) associated with said eUICC for IoT devices (102) is reachable; or
- is performed in response to events involving the at least one further remote manager module (112) and/or the eUICC for IoT devices (102).

5. The method according to any one of the previous claims, wherein said operation of checking (304) comprises performing at least one connection, preferably by pinging, attempt towards the at least one further remote manager module (112), in particular via an IoT Profile Assistant in the IoT Device (110) or an IoT Profile Assistant in the eUICC (110').

6. The method according to any one of the previous claims, comprising, at the eUICC for IoT devices (102):
- verifying whether an IP address of the at least one further remote manager module (112) is available, and
- if said IP address is not available, retrieving said IP address by executing a Domain Name System, DNS, session.

7. The method according to any one of the previous claims, comprising verifying at the eUICC for IoT devices (102) whether said absence (N) of reachable further remote manager modules (112) associated with said eUICC for IoT devices (102) is caused by an error of a communication network;
wherein said operation of checking (304) indicates (306) an absence (N) of reachable further remote manager modules (112) associated with said eUICC for IoT devices (102) if said operation of verifying indicates that the absence is not caused by an error of the communication network.

8. The method according to any one of the previous claims, wherein said operation of enabling (308) the fallback remote manager module (112_{FB}) to operate on the eUICC for IoT devices (102) comprises enabling the fallback remote manager module (112_{FB}) to perform:
- operations for managing profiles stored within the eUICC for IoT devices (102), in particular Profile State Management Operations, PSMOs; and
- operations for managing further remote manager modules (112) in the eUICC for IoT devices (102), in particular eIM Configuration Operations, eCOs.

9. The method according to any one of the previous claims, comprising, in response to the operation of enabling (308) the fallback remote manager module (112_{FB}) to operate on the eUICC for IoT devices (102), sending from said eUICC for IoT devices (102) a notification to the fallback remote manager module (112_{FB}) indicating that said fallback remote manager module (112_{FB}) is enabled to perform operations on the eUICC for IoT devices (102).

10. The method according to any one of the previous claims, comprising, at the eUICC for IoT devices (102):
- in response to the operation of enabling (308) the fallback remote manager module (112_{FB}) to operate on the eUICC for IoT devices (102), receiving a request of association from said fallback remote manager module (112_{FB}) indicating to associate the eUICC for IoT devices (102) with a new remote manager module, in particular a new eSIM IoT remote Manager eIM; and
- storing into the eUICC for IoT devices (102) configuration data of said new remote manager module.

11. The method according to claim 10, comprising disabling, at the eUICC for IoT devices (102) and in response to said operation of storing into the eUICC for IoT devices (102) configuration data of said new remote manager module, the operation of the fallback remote manager module (112_{FB}).

12. The method according to any one of the previous claims, wherein the embedded Universal Integrated Circuit Card, eUICC, for Internet of Things, IoT, devices (102) is operated according to the GSMA SGP.32 standard or the GSMA SGP.31 standard.

13. An embedded Universal Integrated Circuit Card, eUICC, for Internet of Things, IoT, devices (102) configured to have associated therewith:
- a fallback remote manager module (112_{FB}), in particular a fallback eSIM IoT remote Manager eIM, which upon association (300) with the eUICC for IoT devices (102) is configured to have its operation disabled; and
- at least one further remote manager module (112), in particular at least one further eSIM IoT remote Manager eIM;
said eUICC for IoT devices (102) being configured to execute the steps of the method according to any one of the previous claims.

14. A system architecture (10ₐ; 10_{b}), comprising:
- an embedded Universal Integrated Circuit Card, eUICC, for Internet of Things, IoT, devices (102) operating in an IoT device (100) and configured to have associated therewith a fallback remote manager module (112_{FB}) and at least one further remote manager module (112);
- said fallback remote manager module (112_{FB}), in particular a fallback eSIM IoT remote Manager eIM, which upon association (300) with the eUICC for IoT devices (102) is configured to have its operation disabled; and
- said at least one further remote manager module (112), in particular at least one further eSIM IoT remote Manager eIM;
the eUICC for IoT devices (102) comprised in said system architecture (10ₐ; 10_{b}) being configured to perform the steps of the method according to any one of claims 1 to 12.

15. A system architecture (10ₐ; 10_{b}) according to claim 14, wherein said system architecture (10) further comprises at least a server (114), in particular a SM-DP+ server, which is configured to prepare profiles, store profiles, and deliver digital profiles to embedded Universal Integrated Circuit Cards, eUICCs (102), via the fallback remote manager module (112_{FB}) or the at least one further remote manager module (112).
